# EUROPEAN PATENT SPECIFICATION

(11) **EP 1 906 286 B1**
(45) Date of publication and mention of the grant of the patent: **27.01.2010**
(21) Application number: 06121564.6
(22) Date of filing: 29.09.2006
(51) Int. Cl.: G05B 19/418

(54) **Flexible control of field devices in a computer based control system**
Flexible Steuerung von Feldgeräten bei einem Steuersystem auf Computerbasis
Contrôle flexible de dispositifs de champ dans un système de commande basé sur informatique

(43) Date of publication of application: 02.04.2008
(73) Proprietor: ABB RESEARCH LTD., 8050 Zürich (CH)
(72) Inventor: Aakvaag, Niels, 1362 Hosle (NO); Skaalvik, Jonny, 1385 Asker (NO); Mathiesen, Mogens, 0380 Oslo (NO)
(74) Representative: Dahlstrand, Björn

(56) References cited:
- EP-A1- 1 367 851
- WO-A2-01/35190
- MIORANDI D ET AL: "Hybrid wired/wireless implementations of Profibus DP: a feasibility study based on Ethernet and Bluetooth" COMPUTER COMMUNICATIONS, ELSEVIER SCIENCE PUBLISHERS BV, AMSTERDAM, NL, vol. 27, no. 10, 20 June 2004 (2004-06-20), pages 946-960, XP004503624 ISSN: 0140-3664

## Description

### TECHNICAL FIELD OF THE INVENTION

The present invention relates to the use of field devices provided in a wireless network in relation to a control device provided in an Ethernet based control system. The present invention more particularly relates to a method, proxy device and computer program product for for enabling a control device provided in a first Ethernet based network to control field devices provided in a second short-range wireless network as well as to a computer based control system.

### DESCRIPTION OF RELATED ART

Controllers are often provided in Ethernet based control systems. In these systems a controller may control local entities using IP-addressing or MAC addressing schemes. However such control is often static in nature, in that a controlled device remains the same and performs the same type of control

In computer based system for process or manufacturing control there are used field devices for providing control and/or measurements. These devices are then typically controlled by a controller and receive commands from it and perform various actions locally in the system. A field device may therefore be an element involved in the system such as a pump, a valve, a measuring unit etc. These elements include software that is used locally for handling the tasks they are assigned.

Such field devices can then be provided in a local short-range wireless network. Examples of such networks are ZigBee, Wireless HART and Bluetooth. It should here be known that wireless Hart has not yet received a final specification. Such networks are often dynamic in their nature, which means that the network configuration may change, for instance because of failure and low battery power of a field device.

It would therefore be of interest to allow a more flexible control of a process using such field devices, but without the control device having to get involved in the details of how such field devices interact.

EP 1367851 discloses a control system includes a first network including a controller, a second network including one ore more controlled devices, and a translator correlated with the first network and with the second network. The controlled device comprises a controlled device information management unit which manages controlled device information related to the controlled device; and a controlled device information communication unit which sends controlled device information with appropriate timing. The translator comprises a controlled device information proxy creating means which creates controlled device information proxies based on controlled device information acquired from controlled devices; and an information managing means for registering and managing controlled device information and controlled device information proxies. With this control system, an operator at a remote operation center can easily and remotely control equipment belonging to a network different from a network to which the remote operation center belongs.

WO 0135190 discloses a system for monitoring a variety of environmental and/or other conditions within a defined remotely located region. In accordance with one aspect of the invention, a system is configured to monitor utility meters in a defined area. The system is implemented by using a plurality of wireless transmitters, wherein each wireless transmitter is integrated into a sensor adapted to monitor a particular data input. The system also includes a plurality of transceivers that are dispersed throughout the region at defined locations. The system uses a local gateway to translate and transfer information from the transmitters to a dedicated computer on a network.

Miorandi et al. disclose in Hybrid wired/wireless implementations of Profibus DP: a feasibility study based on Ethernet and Bluetooth", COMPUTER COMMUNICATIONS, NL, vol. 27, no 10, 20 June 2004 pages 946-960, ISSN: 0140-3664, communication networks used by factory automation systems are beginning to employ solutions that, until recently, were used in different fields. In particular, at the lowest level of automation, where, typically, real time communication between controllers and sensors/actuators is required, both Ethernet and wireless networks are becoming solutions of interest. However, the introduction of such technologies poses severe problems in terms of compatibility with already implanted fieldbuses. The paper considers a very popular fieldbus protocol, Profibus DP, and analyzes the possibility of implementing it on hybrid wired/wireless networks, based on Ethernet and Bluetooth, respectively.

### SUMMARY OF THE INVENTION

The present invention is therefore directed towards simplifying the control of field devices in a wireless short range network from a control device in a Ethernet based network.

One object of the present invention is therefore to provide a method of enabling a control device provided in a first Ethernet based network to control field devices provided in a second short-range wireless network that simplifies the control of these field devices from the control device.

This object is according to a first aspect of the present invention achieved through a method for enabling a control device provided in a first Ethernet based network to control field devices provided in a second short-range wireless network via a proxy device providing an interfacing function between the first and the second network comprising the steps of:
receiving in the proxy device, from a number of field devices that are independently forming clusters, information of the clusters and the capabilities of the field devices in these clusters,
creating a logical object for a cluster of field devices regarding one or more related control activities to be addressed by the field devices of this cluster,
receiving all control related signals dedicated to activities addressed by the field devices of said cluster,
determining, in a corresponding logical object, how a received signal is to be handled and
by what entity, and
forwarding the received or one or more corresponding signals to the entity selected through said determination.

Another object of the present invention is to provide a proxy device providing an interfacing function between a first Ethernet based network and a second short-range wireless network for enabling a control device provided in the first network to control field devices in the second network that simplifies the control of these field devices from the control device.

This object is according to a second aspect of the present invention achieved through a proxy device providing an interfacing function between a first Ethernet based network and a second short-range wireless network for enabling a control device provided in the first network to control field devices in the second network and being configured to:
receive, from a number of field devices that are independently forming clusters, information of the clusters and the capabilities of the field devices in these clusters, create a logical object for a cluster of field devices regarding one or more related control activities to be addressed by the field devices of this cluster,
receive all control related signals dedicated to activities addressed by the field devices of said cluster,
determine, in a corresponding logical object, how a received signal is to be handled and
by what entity, and
forward the received or one or more corresponding signals to the entity selected in said determination.

Another object of the present invention is to provide a computer program product for for enabling a control device provided in a first Ethernet based network to control field devices provided in a second short-range wireless network that simplifies the control of these field devices from the control device.

This object is according to a third aspect of the present invention achieved through a computer program product for enabling a control device provided in a first Ethernet based network to control field devices provided in a second short-range wireless network via a proxy device providing an interfacing function between the first and the second network, comprising computer program code to make the proxy device perform when said code is loaded into said proxy device:
receive, from a number of field devices that are independently forming clusters, information of the clusters and the capabilities of the field devices in these clusters, create a logical object for a cluster of field devices regarding one or more related control activities to be addressed by the field devices of this cluster,
receive all control related signals dedicated to activities addressed by the field devices of said cluster,
determine, in a corresponding logical object, how a received signal is to be handled and by what entity, and
forward the received or one or more corresponding signals to the entity selected in said determination.

Another object of the present invention is to provide a computer based control system that simplifies the control of field devices in a wireless short range network from a control device in a Ethernet based network.

This object is according to a fourth aspect of the present invention achieved through a computer based control system comprising:
a control device provided in a first Ethernet based network,
a number of field devices provided in a second short-range wireless network, and
a proxy device configured to:
   receive, from a number of field devices that are independently forming clusters, information of the clusters and the capabilities of the field devices in these clusters,
   create a logical object for a cluster of field devices regarding one or more related control activities to be addressed by the field devices of this cluster,
   receive all control related signals dedicated to activities addressed by the field devices of said cluster,
   determine, in a corresponding logical object, how a received signal is to be handled and by what entity, and
   forward the received or one or more corresponding signals to the entity selected in said determination

The present invention has many advantages. It simplifies the control of field devices from the control device. In this way the control device only asks for a certain action to be performed, but does not have to concern itself with how it is performed and which field device performs it. The invention also provides a very flexible control system, where control can be changed and updated as the status of the field devices change. Since the field devices are using wireless communication they may also be mobile. This together with the flexible handling of clusters allows processes to be controlled in completely new ways. The invention further allows a certain type of control system functionality to be continued even though one field device is being lost.

It should be emphasized that the term "comprises/comprising" when used in this specification is taken to specify the presence of stated features, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 schematically shows a simplified computer based control system comprising a control device in a first Ethernet based network and a number of field devices provided in a second wireless ad-hoc network,
fig. 2 shows a block schematic of a field device,
fig. 3, shows a block schematic of a proxy device according to the present invention
fig. 4 shows a flow chart outlining a number of method steps in a method of enabling the control device to control field devices performed by the proxy device of the present invention,
fig. 5 shows a flow chart outlining a number of method steps performed by the proxy device as it receives measurements from field devices,
fig. 6 shows a flow chart outlining a number of method steps performed by the proxy device as a control device controls field devices, and
fig. 7 schematically shows a computer program product in the form of a CD ROM disc.

### DETAILED DESCRIPTION OF EMBODIMENTS

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. In other instances, detailed descriptions of well known devices, circuits, and methods are omitted so as not to obscure the description of the present invention with unnecessary detail.

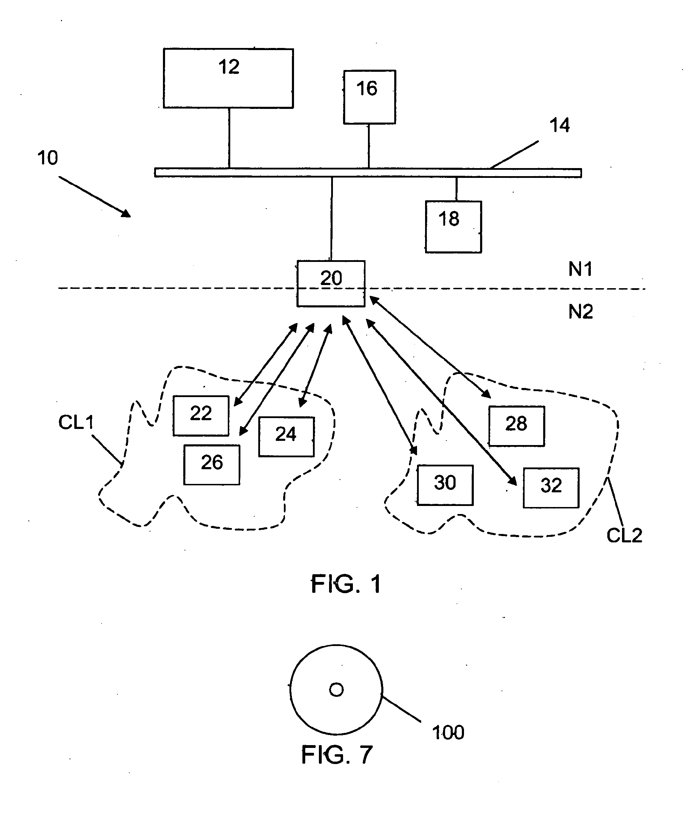

Fig. 1 schematically shows a computer based control system 10. The system may be provided for process or manufacturing control. The system 10 is typically an object based computerised system for controlling a process or perhaps part of a process. Typical processes are electrical power generation and supply process, water purification and distribution processes, oil and gas production and distribution processes, petrochemical, chemical, pharmaceutical and food processes, and pulp and paper production processes. These are just some examples of processes where the system can be applied. There exist countless other processes. Normally in such a system there may be one or more control devices having some local software for controlling one or more field devices. A control device may here be a Process Controller or Programmable Logic Controller (PLC). The field devices may be different entities that influence or measure different properties of the technical process, like such things as a pump, a motor, a valve, etc. A process, or a part of a process, may be controlled via a server, which then typically communicates with a control device for providing control of a process.

In fig. 1 the system 10 includes a control device 12 providing control of different entities such as different field devices via a first type of network N1, which is an Ethernet based network. This network is in many cases fixed but may also be wireless. According to one variation of the present invention this network is a Profinet network. Here the control device 12 is connected to a bus 14. Entities that are controlled may be different types of field devices such as sensors, pumps, valves etc. A first and second such entity 16 and 18 are therefore schematically shown in fig. 1 as being connected to the bus 14 in the first network N1. There is also provided a second network N2, which is a wireless short-range ad-hoc network that according to a variation of the present invention is a ZigBee network comprising a number of wireless field devices 22, 24, 26, 28, 30 and 32. In this second network N2 the field devices 22, 24, 26, 28, 30 and 32 have clustered together in order to form groups or clusters, where a first, second and third such field device 22, 24 and 26 have formed a first cluster CL1, while a fourth, fifth and sixth field device 28, 30 and 32 have formed a second cluster CL2. In fig. 1 there is finally a proxy device 20, which provides an interfacing function between the two networks N1 and N2 in order to allow the control device 12 to control the field devices. Therefore the proxy device 20 is also connected to the bus 14. The field devices are furthermore shown as wirelessly communicating with the proxy device 20. In fig. 1 this communication is furthermore shown as being direct (single hop) between the proxy device 20 and the field devices 22, 24, 26, 28, 30 and 32. It should however be realised that communication may be using a multihop technique. Thus the proxy device may communicate with a specific field device via another device, like another field device.

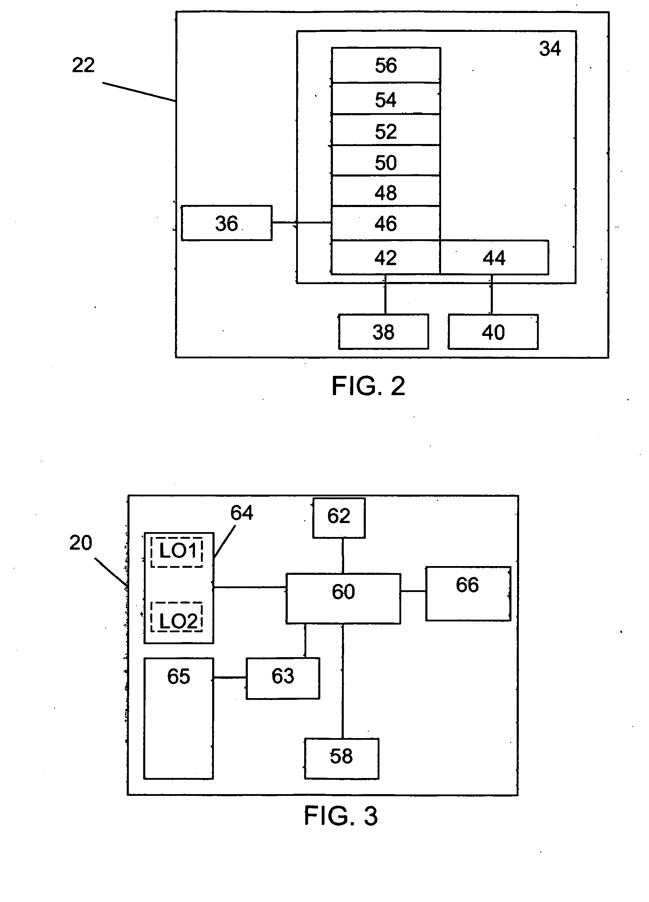

Fig. 2 schematically shows a field device 22. The field device 22 includes a control unit 34 comprising a number of functional units 42 - 56 handling different functions of the device. The control unit 34 is furthermore connected to a sensor 38, which may be a temperature sensor, a humidity sensor or some other type of sensor, an actuating unit 40, which may actuate a part of a process such as a valve, a heater, a fan etc., and a radio communication circuit 36. It should here be realised that the actuating unit 40 may be provided in addition to or instead of the sensor. The control unit 34 therefore typically includes a number of functional units, where fig. 2 shows a sensor handling unit 42 in order to communicate with the sensor 38 and an actuation handling unit 44 in order to communicate with the actuating unit 40. Here it should be realised that the handling units 42 and 44 may be omitted if the corresponding unit being handled is not provided in the field device 22. There may furthermore exist several different sensor handling units and actuation handling units if more sensing and actuating functionalitites are to be provided. The control unit 34 furthermore comprises a unit 38 for handling communicating in the network, which in the present case may be a ZigBee communication unit 38.This unit 38 is furthermore connected to the radio communication circuit 36. There is furthermore a profile unit 48 indicating the type of characteristics where the field device is used, a local intelligence unit 50 comprising knowledge of how to react if it is not discovered, if it wants to be discovered etc., in short how to react in case not being contacted by other devices in the second network, a configuration unit 52 comprising the configurations of the field device, a processing unit 54 comprising functions for processing data and sensor control signals as well as a history unit 56 comprising history data regarding historic measurements, control settings etc. These units 42 - 56 may be provided in the form of a processor with corresponding software for performing the functions.

Fig. 3 schematically shows a proxy device 20 according to the present invention. The proxy device 20 comprises an interface 58 to the second network for communicating with field devices, an interface 62 to the first network for communicating with the control device, a logical object store 64 comprising logical objects LO1 and LO2 created for different clusters in the second network, a control unit 60 and a processing unit 66 for performing processing in relation to different received control related signals according to settings made in a logical object LO. There is finally a data handling unit 63 connected to the control unit 60 and to a measurement data store 65.

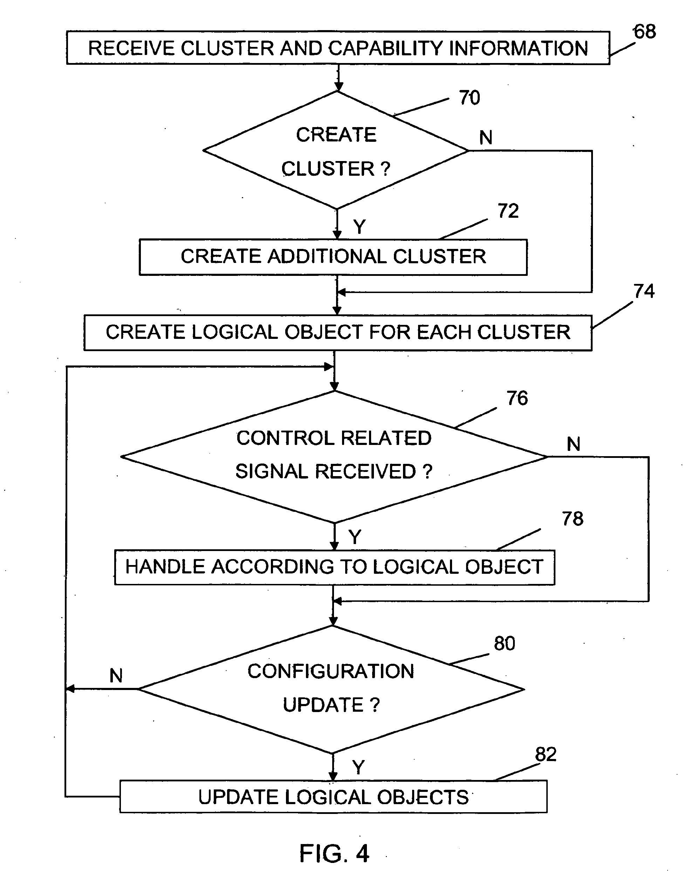

Now the present invention will be described in relation to the previously described fig. 1 - 3 as well as in relation to fig. 4, which shows a flow chart outlining a number of method steps in a method of enabling the control device to control field devices that is performed by the proxy device of the present invention.

The second network N2 is a dynamic short-range ad-hoc network, which means that the different field devices 22, 24, 26, 28, 30 and 32 communicate with each other in order to find out their capabilities. They then also form clusters of cooperating devices, where they may for instance determine what capabilities they have and negotiate which device is to report which type of process data or which device is to control a process. The clustering may be performed through the different field devices discovering each other in a discovery phase and forming clusters depending on such things as their locations, the type of data to be reported, the type of control to be performed etc. They may thus independently organize themselves in order to minimise energy consumption and in order to generate useful output cluster data. In fig. 1 there is shown how two such cluster CL1 and CL2 have been formed. When these clusters have been formed, the clusters CL1 and CL2 are reported to the control unit 60 of the proxy device 20 via interface 58, step 68. Here the proxy device 20 also receives information about the different capabilities and settings of the field devices in the cluster, i.e. what all field devices can do and what they have jointly decided that each field device is to do.

Thereafter the control unit 60 of the proxy device 20 determines if a new cluster is to be created or not, step 70, where a cluster is a new grouping of the field devices. This may for instance be done in order to take care of a certain property of a process in a special manner. If such cluster is to be created, step 70, the control unit 60 of the proxy device 22 orders the field devices to form such a cluster via the interface 58, step 72. It should here be noted that clusters may be overlapping, i.e. that a field device may be provided in more than one cluster. The number of field devices provided in a cluster may also vary from one up to basically all the field devices in the network. A clustering may as was mentioned earlier here be made according to geographical location, where for instance all field devices provide in the same location are in the same cluster and/or made according to functionality. The field devices may also be redundant in that there may be more than one field device that can handle a certain type of application. In this case they may negotiate with each other which field device is to handle a certain type or data or not. This also means that there may be provided field devices that are not part of a cluster.

Then the control unit 60 of proxy device 20 creates logical objects LO1 and LO2 for each cluster, step 74. This is done irrespective of if a new cluster was created or not. The logical object here keeps track of the field devices that belong to a cluster, what data is to be produced by a cluster and how it is to be reported, what field devices are to participate and how, the internal topology of the field devices, their capabilities, if some local processing is to be performed in one or more of the field devices, how to replace a failing field device etc. A logical object may also determine if some further processing is to be performed in the proxy device or not. When the forming of a cluster has been ordered by the proxy device 20, the logical object may be directed towards mapping of a new deduced or secondary parameter such as gas and temperature gradients, i.e. which is concerned with some additional processing based on other measured properties. Thus a logical object provides information in relation to one or more related control activities to be addressed by the field devices of the cluster. It thus determines how control related signals are to be handled in relation to the different clusters and in what entity these signals and/or processing related to these signals are to be handled. There may furthermore be fewer logical objects than clusters or more logical object than clusters. Finally the control unit 60 provides a mapping between different control related signals it may receive from both the control device and the second network and the logical objects that correspond to such control related signals. The thus created logical objects LO1 and LO2 are stored in logical object store 64. The forming of a logical object may thus be decided by the clustering of the field devices, i.e. the field devices decide what logical objects should be created. It is also possible that the proxy device decides what logical objects are to be created. It is finally possible that the control device decides what logical objects are to be created. It is furthermore possible with a combination of any of these approaches.

A control related signal may here be a control signal sent from the control device 12 in order to obtain one or more sensor measurements or in order to perform some control of a process, like setting of different set points for physical entities provided in a process, such as influencing a valve. It may also be a response to such a control signal as well as different signals provided by clusters on their own volition, for instance when an alarm limit has been exceeded. An entity performing handling in relation to a process related signal may be a control device. It may also be one or more specific field devices in a cluster. Also a cluster may be regarded as an entity, in that a task is assigned to a cluster and sent to it, for instance through using broadcasting, whereupon the different field devices of the cluster perform the handling according to a scheme they have jointly agreed upon.

As the logical object has been set, the control unit 60 of the proxy device 20 now investigates if it has received a control related signal, either from the control device 12 via interface 62 or from a cluster via interface 58, step 76. In case it has receives such a signal, step 76, it then handles the signal and the processing associated with it according to the settings of the associated logical object, step 78. More details concerning this will be given later. Thereafter, irrespective of if a control related signal has been received or not, the control unit 60 continues and investigates if the configuration of the second network has changed or if a new configuration is necessary, step 80. The second network N2 is a dynamic network. This means that the clusters may change, for instance because a field device is out of power, in which case another field device may join a cluster. There may also be a regrouping because of the process which is being controlled. The process may for instance move into a new phase where new properties might need to be measured. In this case the proxy device 20 may order new field devices that have the ability to handle the property to be joined to a cluster. It is also possible that field devices in a cluster change roles. Some may for instance change from measuring temperature to measuring humidity, while others may remain measuring temperature. Another reason for change can take place if for instance there is a failure in some field devices, for example because of low battery power. Another reason may be because field devices may have moved away and can no longer be reached. The change of network configuration may involve a change in the formation of clusters or through the proxy device 20 determining that a cluster should be changed or added and thereafter implemented. If there was such a change in network configuration, the proxy device 20 updates the logical objects accordingly, step 82. Thereafter, irrespective of if there has been a network configuration change or not, the control unit 60 goes back and yet again investigates if a control related signal has been received or not, step 76.

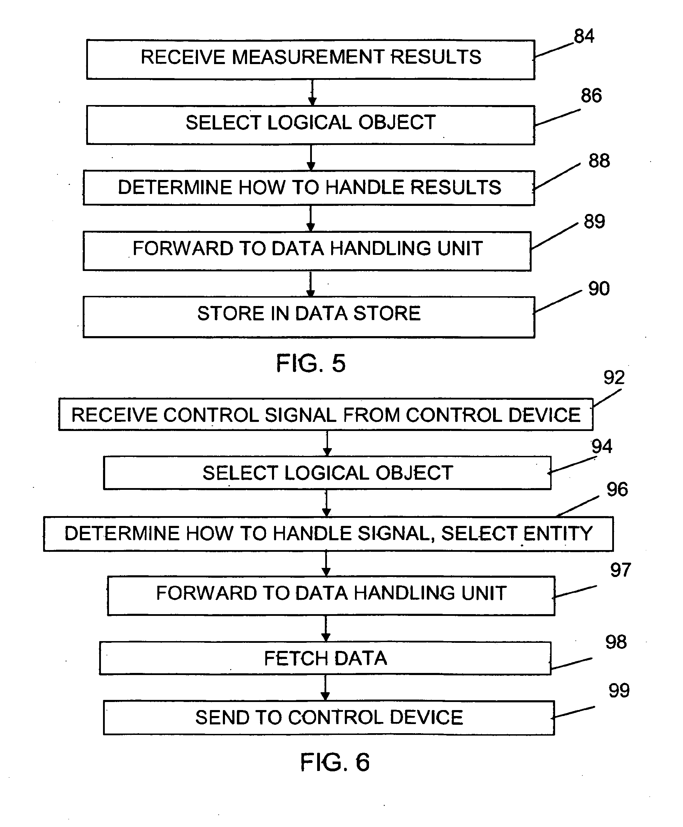

In order to describe how the proxy device handles control related signals in more detail, reference is now also being made to fig. 5 and 6, which show a number of method steps performed by the proxy device as it receives measurements from field devices and a number of further method steps performed by the proxy device when receiving such control related signals from the control device, respectively. In fig. 6 this is exemplified by a control signal received from the control device and in fig. 5 by measurements provided by a cluster.

In the example the control device 12 wants to have some type of measurement values from a cluster. The proxy device may here continuously receive measurement results from the field devices of the clusters, where the starting of obtaining measurements may have been ordered by the control device 12 through a previously sent control signal. These measurement results are thus received by the proxy device 20 independently of control signals from the control device 12. When such measurement results are received by the control unit 60 via interface 58, step 84, the logical object associated with the data is located via the mapping made, step 86. By investigating this logical object, the control unit 60 determines how to handle the data, step 88, i.e. investigates which entity is to receive the results and if any processing is to be performed in relation to the response. It may here order the processing unit 66 to perform possible further processing of the measurement data. It then determines a measurement data area associated with the logical object in the measurement data store 65 where the data is to be stored, forwards the data, possibly processed, to the data handling unit 63, step 89 and orders it to store the data in the data store 65, step 90.

The control device 12 may then send a request for measurement data, which may be a temperature value of a certain process section. This request is sent to the control unit 60 of the proxy device 20 via interface 62, which thus receives this signal, step 92. The control unit 60 then analyses the request. Based on the analysis it then selects a logical object in logical object store 64 according to the mapping made, step 94, i.e. a logical object that defines how requests of this type are to be handled. The logical object may indicate what field devices that have been used for such information retrieval, if the information retrieval is to be made recurrently, perhaps from different field devices in the cluster, if it is to be followed by later information retrieval, in short it determines what type of information retrieval is to be performed and what entity that is to receive the control signal or a signal corresponding to it. The logical object furthermore indicates if any processing of retrieved data is to be performed either in field devices of the corresponding cluster and/or in the proxy device. The control unit 60 thus determines how the signal is to be handled and what entity is to perform operations relating to the signal based on the logical object, step 96. When this has been done the control unit 60 then forwards either the actual received control signal or one or more corresponding control signals to the data handling unit 63, step 97, which in turn fetches data from the corresponding data area of store 65, step 98. The fetched data is then sent by the control unit 60 to the control device 12, step 99.

In this way the control device only asks for a certain action to be performed, but does not have to concern itself with how it is performed and which field device performs it. The invention also provides a very flexible control system, where control can be changed and updated as the status of the field devices change. Since the field devices are using wireless communication, they may be mobile. This together with the flexible handling of clusters allows processes to be controlled in completely new ways. The invention further allows a certain type of control system functionality to be continued even though one field device is being lost.

It should here be realised that the above mentioned way of communication is equally as well applicable for any control that is to be performed in the process, like increasing a rotational speed, changing a flow, changing a temperature, changing the amount of an additive in a chemical process etc. It should also be realised that a field device may not wait on a request that originates from the control device. It may just as well report some type of event on its own initiative, for instance provide an alarm. When receieving such a signal, the proxy device would locate the corresponding logical object, perform possible processing specified therein and route results to the control device. It is furthermore possible for different type of measurements, that data is not stored in the data store, but that the proxy device functions as a switch, which determines which cluster is to receive a control signal based on a logical object, forwards the control signal to the cluster, receives a response including the measurement result from the cluster and forwards the response to the control device using a logical object. In some other instances there may also be no response at all to a control signal from the control device, for instance if a control to a certain set point of a process is to be performed.

The proxy device thus has a lot of information about the field devices. It is here also possible that the proxy device may provide the control device or other devices of the system, for instance operator or engineering terminals, with such information. This information may for instance include configuration settings of field devices, the geographical location of clusters, topological information, functional descriptions like parameters given by sensors, cooperative strategy of a cluster, the power used and energy reservoirs of field devices, as well as communication parameters like packet loss, time delays and number of hops.

The proxy device may be provided as a separate physical entity of the first network, like in a PC. It may also be provided together with some other entities of the first network, like the control device. It should furthermore be realised that it need not include the interface to the second network, but may communicate with this interface via another entity of the first network that has such an interface. Since it may be provided in a computer, the proxy device may here be implemented through one or more processors together with computer program code for performing its functions, where the logical object store is preferably provided through one or more memories, such as RAM or ROM memories. The program code mentioned above may also be provided as a computer program product, for instance in the form of one or more data carriers carrying computer program code for performing the functionality of the present invention when being loaded into the computer. One such carrier 100, in the form of a CD ROM disc is generally outlined in fig. 7. It is however feasible with other data carriers, like diskettes, memory sticks or USB memories. The computer program code of a proxy device can furthermore be provided as pure program code on an external server and downloaded from there for provision in the proxy device.

The wireless communication units may use a number of communication standards. Examples are IEEE 802.15.4 Wireless HART, WLAN 802.11, Bluetooth, ZigBee or WISA.

While the invention has been described in connection with what is presently considered to be most practical and preferred embodiments, it is to be understood that the invention is not to be limited to the disclosed embodiments, but on the contrary, is intended to cover various modifications and equivalent arrangements. Therefore the present invention is only to be limited by the following claims.

## Claims

1. Method for enabling a control device (12) provided in a first Ethernet based network (N1) to control field devices (22, 24, 26, 28, 30, 32) provided in a second short-range wireless network (N2) via a proxy device (20) providing an interfacing function between the first and the second network **characterised by** comprising the steps of:
receiving (68) in the proxy device, from a number of the field devices that are independently forming a plurality clusters, information of the clusters including field devices included in each cluster and the capabilities of the field devices in these clusters,
creating (74) a logical object (LO1, LO2) for a cluster of field devices regarding one or more related control activities to be addressed by the field devices of this cluster, receiving (76, 84, 92) all control related signals dedicated to activities addressed by the field devices of said cluster,
determining (78, 88, 96), in a corresponding logical object, how a received signal is to be handled and by what field device, and
forwarding (89, 98) the received or one or more corresponding signals to the field device selected through said determination.

2. Method according to claim 1, wherein the step of receiving control related signals comprises receiving (84) a control signal from the control device, the step of determining comprises determining (88) at least one field device handling activities to be performed in relation to the control signal.

3. Method according to claim 1 or 2, wherein the step of forwarding comprises forwarding the signal or one or more corresponding signals to said field device.

4. Method according to claim 1 or 2, wherein the step of forwarding comprises forwarding (98) a signal to a data handling unit (63) ordering it to fetch data, and further comprising the steps of fetching (98), by the data handling unit, data from a data store (65) and responding to the received signal with the fetched data.

5. Method according to previous claim, wherein the step of receiving control related signals comprises receiving a measurement related signal (84) from a field device, the step of determining comprises determining (88) how said signal is to be reported to the control device, and the step of forwarding comprises forwarding (89) the signal or one or more corresponding signals to a data handling unit (63) and further comprising the step of storing (90) said signal or corresponding signals in a data store (65).

6. Method according to claim 5, wherein the measurement related signal is received as a response to a control signal previously received from the control device.

7. Method according to any previous claim, wherein at least one cluster configuration is dynamic and further comprising the step of receiving an update from a cluster or ordering a cluster to update itself, (80).

8. Method according to claim 7, further comprising the step of updating (82) a logical object associated with an updated cluster.

9. Method according to any previous claim, further comprising the steps of ordering (72) at least some field devices to form a cluster and creating (74) a corresponding logical object in the proxy device.

10. Method according to any previous claim, wherein there is more than one cluster and where some field devices may belong to more than one cluster.

11. Proxy device (20) providing an interfacing function between a first Ethernet based network (N1) and a second short-range wireless network (N2) for enabling a control device (12) provided in the first network to control field devices (22, 24, 26, 28, 30, 32) in the second network and **characterised by** being configured to:
receive, from a number of the field devices that are independently forming clusters (CL1, CL2), information of the clusters including field devices included in each cluster and the capabilities of the field devices in these clusters,
create a logical object (LO1, LO2) for a cluster of field devices regarding one or more related control activities to be addressed by the field devices of this cluster,
receive all control related signals dedicated to activities addressed by the field devices of said cluster,
determine, in a corresponding logical object, how a received signal is to be handled and by what field device*,* and
forward the received or one or more corresponding signals to the field device selected in said determination.

12. Proxy device according to claim 11, which when being configured to receive control related signals is further configured to receive a control signal from the control device, when being configured to determine how a received signal is to be handled is further configured to determine at least one field device handling activities to be performed in relation to the control signal, and when being configured to forward the received or a corresponding signal is configured to forward the signal or one or more corresponding signals to said field device.

13. Proxy device according to claim 11 or 12, which when being configured to forward the received or a corresponding signal is configured to forward the signal or one or more corresponding signals to said field device.

14. Proxy device according to claim 11 or 12, which when being configured to forward the received or a corresponding signal is configured to forward signals to a data handling unit (63), fetch, by the data handling unit, data from a data store (65) and respond to the received signal with the fetched data.

15. Proxy device according to any of claims 11 - 14, which when being configured to receive control related signals is further configured to receive a measurement related signal from a field device, when being configured to determine how a received signal is to be handled is further configured to determine how said signal is to be reported to the control device, and when being configured to forward the received or a corresponding signal is configured to forward the signal or one or more corresponding signals to a data handling unit (63) and order it to store said signal or corresponding signals in a data store (65).

16. Proxy device according to claim 15, wherein the measurement related signal is received as a response to a control signal previously received from the control device.

17. Proxy device according to any of claims 11 - 16, wherein at least one cluster configuration is dynamic and the proxy device being further configured to receive an update from a cluster or to order a cluster to update itself.

18. Proxy device according to claim 17, being further configured to update a logical object associated with an updated cluster.

19. Proxy device according to any of claims 11 - 18, being further configured to order at least some field devices to form a cluster and itself being configured to create a corresponding logical object.

20. Proxy device according to any of claims 11 - 19, wherein there is more than one cluster, where some field devices may belong to more than one cluster.

21. Computer program product (100) for enabling a control device (12) provided in a first Ethernet based network (N1) to control field devices (22, 24, 26, 28, 30, 32) provided in a second short-range wireless network (N2) via a proxy device (20) providing an interfacing function between the first and the second network, comprising computer program code to make the proxy device perform, when said code is loaded into said proxy device, the steps of claim 1.

22. Computer based control system (10) comprising:
a control device (12) provided in a first Ethernet based network (N1),
a number of field devices (22, 24, 26, 28, 30, 32) provided in a second short-range wireless network, and
a proxy device (20) according to claim 11.

## Patentansprüche

1. Verfahren, um es einer Kontrollvorrichtung (12), die in einem ersten Ethernet-basierten Netzwerk (N1) bereitgestellt wird, zu ermöglichen, Feldvorrichtungen (22, 24, 26, 28, 30, 32), die in einem zweiten drahtlosen Netzwerk (N2) für eine kurze Reichweite bereitgestellt werden, über eine Proxyvorrichtung (20) zu kontrollieren, die eine Schnittstellenfunktion zwischen dem ersten und dem zweiten Netzwerk bereitstellt, **dadurch gekennzeichnet, dass** das Verfahren die Schritte umfasst:
Empfangen (68) in der Proxyvorrichtung von einer Anzahl der Feldvorrichtungen, die unabhängig eine Vielzahl Cluster bilden, Informationen der Cluster, die Feldvorrichtungen beinhalten, die in jedem Cluster beinhaltet sind, und der Leistungsfähigkeiten der Feldvorrichtungen in diesen Clustern,
Erzeugen (74) eines logischen Objektes (LO1, LO2) für ein Cluster von Feldvorrichtungen, betreffend eine oder mehrere in Beziehung stehende Kontrollaktivitäten, mit denen sich die Feldvorrichtungen dieses Clusters befassen sollen,
Empfangen (76, 84, 92) aller kontrollbezogenen Signale, die Aktivitäten zugeordnet sind, mit denen sich die Feldvorrichtungen des Clusters befassen,
Bestimmen (78, 88, 96), in einem entsprechenden logischen Objekt, wie ein empfangenes Signal verarbeitet werden soll und durch welche Feldvorrichtung, und
Senden (89, 98) des empfangenen oder des einen oder der mehreren entsprechenden Signale zu der Feldvorrichtung, die durch die Bestimmung ausgewählt wurden.

2. Verfahren nach Anspruch 1, wobei der Schritt des Empfangens der kontrollbezogenen Signale Empfangen (84) eines Kontrollsignals von der Kontrollvorrichtung umfasst, der Schritt des Bestimmens Bestimmen (88) zumindest einer Feldvorrichtung umfasst, die Aktivitäten verarbeitet, die in Bezug zu dem Kontrollsignal ausgeführt werden sollen.

3. Verfahren nach einem der Ansprüche 1 oder 2, wobei der Schritt des Sendens Senden des Signals oder des einen oder der mehrerer entsprechenden Signale zu der Feldvorrichtung umfasst.

4. Verfahren nach Anspruch 1 oder 2, wobei der Schritt des Sendens Senden (89) eines Signals zu einer Datenverarbeitungseinheit (63) umfasst, ihr befehlend, Daten herbeizuholen, und weiterhin umfassend den Schritt des Herbeiholens (98), durch die Datenverarbeitungseinheit, von Daten von einem Datenspeicher (65) und des Antwortens auf das empfangene Signal mit den herbeigeholten Daten.

5. Verfahren nach einem der vorangehenden Ansprüche, wobei der Schritt des Empfangens von kontrollbezogenen Signalen Empfangen eines messungsbezogenen Signals (84) von einer Feldvorrichtung umfasst, der Schritt des Bestimmens Bestimmen (88), wie das Kontrollsignal an die Kontrollvorrichtung berichtet werden soll, umfasst und der Schritt des Sendens Senden (89) des Signals oder des einen oder der mehreren entsprechenden Signale an eine Datenverarbeitungseinheit (63) umfasst und weiterhin umfassend den Schritt des Speichems (90) des Signals oder der entsprechenden Signale in einem Datenspeicher (65).

6. Verfahren nach Anspruch 5, wobei das messungsbezogene Signal als eine Antwort auf ein Kontrollsignal, das vorher von der Kontrollvorrichtung empfangen wurde, empfangen wird.

7. Verfahren nach einem der vorangehenden Ansprüche, wobei zumindest eine Clusterkonfiguration dynamisch ist und weiterhin umfassend den Schritt des Empfangens einer Aktualisierung von einem Cluster oder den Schritt des einem Cluster Befehlens, sich selbst zu aktualisieren (80).

8. Verfahren nach Anspruch 7, weiterhin umfassend den Schritt des Aktualisierens (82) eines logischen Objektes, das mit einem aktualisierten Cluster verbunden ist.

9. Verfahren nach einem der vorangehenden Ansprüche, weiterhin umfassend den Schritt des Befehlens (72) zumindest einigen Feldvorrichtungen, ein Cluster zu formen und des Erzeugens (74) eines entsprechenden logischen Objektes in der Proxyvorrichtung.

10. Verfahren nach einem der vorangehenden Ansprüche, wobei es mehr als ein Cluster gibt und wobei einige Feldvorrichtungen zu mehr als einem Cluster gehören können.

11. Proxyvorrichtung (20), die eine Schnittstellenfunktion zwischen einem ersten Ethernet-basierten Netzwerk (N1) und einem zweiten drahtlosen Netzwerk (N2) mit kurzer Reichweite bereitstellt, um es einer Kontrollvorrichtung (12), die in dem ersten Netzwerk bereitgestellt wird, zu ermöglichen, Feldvorrichtungen (22, 24, 26, 28, 30, 32) in dem zweiten Netzwerk zu kontrollieren und **dadurch gekennzeichnet, dass** die Proxyvorrichtung konfiguriert ist, um:
von einer Anzahl der Feldvorrichtungen, die unabhängig Cluster (CL1, CL2) bilden, Informationen der Cluster, die Feldvorrichtungen beinhalten, die in jedem Cluster beinhaltet sind, und Leistungsfähigkeiten der Feldvorrichtungen in diesen Clustern zu empfangen
ein logisches Objekt (LO1, LO2) für ein Cluster von Feldvorrichtungen betreffend eine oder mehrere in Beziehung stehende Kontrollaktivitäten, mit denen sich die Feldvorrichtungen dieses Clusters befassen sollen, zu erzeugen,
alle kontrollbezogenen Signale zu empfangen, die Aktivitäten zugeordnet sind, mit denen sich die Feldvorrichtungen des Clusters befassen,
in einem entsprechenden logischen Objekt zu bestimmen, wie ein empfangenes Signal verarbeitet werden soll und durch welche Feldvorrichtung, und
das empfangene oder das eine oder die mehreren entsprechenden Signale zu der Feldvorrichtung zu senden, die in der Bestimmung ausgewählt wurden.

12. Proxyvorrichtung nach Anspruch 11, welche, wenn sie konfiguriert ist, kontrollbezogene Signale zu empfangen, weiterhin konfiguriert ist, ein Kontrollsignal von der Kontrollvorrichtung zu empfangen, wenn sie konfiguriert ist, zu bestimmen, wie ein empfangenes Signal verarbeitet werden soll, weiterhin konfiguriert ist, zumindest eine Feldvorrichtung zu bestimmen, die Aktivitäten verarbeitet, die in Bezug zu dem Kontrollsignal ausgeführt werden sollen, und wenn sie konfiguriert ist, das empfangene oder ein entsprechendes Signal zu senden, konfiguriert ist, das Signal oder das eine oder mehrere entsprechende Signale an die Feldvorrichtung zu senden.

13. Proxyvorrichtung nach Anspruch 11 oder 12, welche, wenn sie konfiguriert ist, das empfangene oder ein entsprechendes Signal zu senden, konfiguriert ist, das Signal oder ein oder mehrere entsprechende Signale an die Feldvorrichtung zu senden.

14. Proxyvorrichtung nach Anspruch 11 oder 12, welche, wenn sie konfiguriert ist, das erhaltene oder ein entsprechendes Signal zu senden, konfiguriert ist, Signale an eine Datenverarbeitungseinheit (63) zu senden, Daten von einem Datenspeicher (65) durch die Datenverarbeitungseinheit herbeizuholen und auf das empfangene Signal mit den herbeigeholten Daten zu antworten.

15. Proxyvorrichtung nach einem der Ansprüche 11 bis 14, welche, wenn sie konfiguriert ist, kontrollbezogene Signale zu empfangen, weiterhin konfiguriert ist, ein messungsbezogenes Signal von einer Feldvorrichtung zu empfangen, wenn sie konfiguriert ist, zu bestimmen, wie ein empfangenes Signal verarbeitet werden soll, weiterhin konfiguriert ist, zu bestimmen, wie das Signal an die Kontrollvorrichtung berichtet werden soll, und wenn sie konfiguriert ist, das empfangene oder ein entsprechendes Signal zu senden, konfiguriert ist, das Signal oder eines oder mehrere entsprechende Signale an eine Datenverarbeitungseinheit (63) zu senden und ihr zu befehlen, das Signal oder die entsprechenden Signale in einem Datenspeicher (65) zu speichern.

16. Proxyvorrichtung nach Anspruch 15, wobei des messungsbezogene Signal als eine Antwort auf ein Kontrollsignal, das vorher von der Kontrollvorrichtung empfangen wurde, empfangen wird.

17. Proxyvorrichtung nach einem der Ansprüche 11 bis 16, wobei zumindest eine Clusterkonfiguration dynamisch ist und die Proxyvorrichtung weiterhin konfiguriert ist, eine Aktualisierung von einem Cluster zu empfangen oder einem Cluster zu befehlen, sich selbst zu aktualisieren.

18. Proxyvorrichtung nach Anspruch 17, weiterhin konfiguriert, ein logisches Objekt, das mit einem aktualisierten Cluster verbunden ist, zu aktualisieren.

19. Proxyvorrichtung nach einem der Ansprüche 11 bis 18, weiterhin konfiguriert, zumindest einigen Feldvorrichtungen zu befehlen, ein Cluster zu bilden und selbst konfiguriert, ein entsprechendes logisches Objekt zu erzeugen.

20. Proxyvorrichtung nach einem der Ansprüche 11 bis 19, wobei es mehr als ein Cluster gibt, wobei einige Feldvorrichtungen zu mehr als einem Cluster gehören können.

21. Computerprogrammprodukt (100), um es einer Kontrollvorrichtung (12), die in einem ersten Ethernet-basierten Netzwerk (N1) bereitgestellt wird, zu ermöglichen, Feldvorrichtungen (22, 24, 26, 28, 30, 32), die in einem zweiten drahtlosen Netzwerk (N2) mit kurzer Reichweite bereitgestellt werden, über eine Proxyvorrichtung (20) zu kontrollieren, die eine Schnittstellenfunktion zwischen dem ersten und dem zweiten Netzwerk bereitstellt, umfassend Computerprogrammcode, um die Proxyvorrichtung zu veranlassen, die Schritte von Anspruch 1 auszuführen, wenn der Code in die Proxyvorrichtung geladen wird.

22. Computerbasiertes Kontrollsystem (10), umfassend:
eine Kontrollvorrichtung (12), die in einem ersten Ethernet-basierten Netzwerk (N1) bereitgestellt wird,
eine Anzahl von Feldvorrichtungen (22, 24, 26, 28, 30, 32), die in einem zweiten drahtlosen Netzwerk mit kurzer Reichweite bereitgestellt werden, und
eine Proxyvorrichtung (20) nach Anspruch 11.

## Revendications

1. Procédé pour permettre à un dispositif de commande (12) placé dans un premier réseau basé sur Ethernet (N1) de commander des dispositifs de champ (22, 24, 26, 28, 30, 32) placés dans un deuxième réseau sans fil à courte distance (N2) via un dispositif mandataire (20) fournissant une fonction d'interface entre les premier et deuxième réseaux, **caractérisé en ce qu'**il comprend les étapes consistant à :
recevoir (68) dans le dispositif mandataire, depuis un nombre des dispositifs de champ qui forment indépendamment une pluralité de grappes, de l'information des grappes comprenant les dispositifs de champ inclus dans chaque grappe et les capacités des dispositifs de champ dans ces grappes,
créer (74) un objet logique (LO1, LO2) pour une grappe de dispositifs de champ concernant une ou plusieurs activités de commande liées devant être adressées par les dispositifs de champ de cette grappe,
recevoir (76, 84, 92) tous les signaux liés à la commande dédiés aux activités adressées par les dispositifs de champ de ladite grappe,
déterminer (78, 88, 96), dans un objet logique correspondant, comment un signal reçu doit être traité et par quel dispositif de champ, et
transmettre (89, 98) le signal reçu ou le ou les signaux correspondants au dispositif de champ sélectionné par ladite détermination.

2. Procédé selon la revendication 1, dans lequel l'étape de réception de signaux liés à la commande comprend la réception (84) d'un signal de commande provenant du dispositif de commande, l'étape de détermination comprend la détermination (88) d'au moins un dispositif de champ traitant des activités devant être exécutées relativement au signal de commande.

3. Procédé selon la revendication 1 ou 2, dans lequel l'étape de transmission comprend la transmission du signal ou d'un ou plusieurs signaux correspondants audit dispositif de champ.

4. Procédé selon la revendication 1 ou 2, dans lequel l'étape de transmission comprend la transmission (98) d'un signal vers une unité de traitement de données (63) ordonnant à celle-ci de récupérer des données, et comprenant en outre les étapes consistant à récupérer (98), au moyen de l'unité de traitement de données, des données dans un magasin de données (65) et à répondre au signal reçu avec les données récupérées.

5. Procédé selon la précédente revendication, dans lequel l'étape de réception de signaux liés à la commande comprend la réception d'un signal lié à la mesure (84) provenant d'un dispositif de champ, l'étape de détermination comprend la détermination (88) de comment ledit signal doit être rapporté au dispositif de commande, et l'étape de transmission comprend la transmission (89) du signal ou de un ou plusieurs signaux correspondants vers une unité de traitement de données (63) et comprenant en outre l'étape consistant à stocker (90) ledit signal ou les signaux correspondants dans un magasin de données (65).

6. Procédé selon la revendication 5, dans lequel le signal lié à la mesure est reçu comme réponse à un signal de commande précédemment fourni par le dispositif de commande.

7. Procédé selon l'une quelconque des revendications précédentes, dans lequel au moins une configuration de grappe est dynamique et comprenant en outre l'étape consistant à recevoir d'une grappe une mise à jour ou à ordonner à une grappe de se mettre à jour elle-même (80).

8. Procédé selon la revendication 7, comprenant en outre l'étape consistant à mettre à jour (82) un objet logique associé à une grappe mise à jour.

9. Procédé selon l'une quelconque des revendications précédentes, comprenant en outre les étapes consistant à mettre en ordre (72) au moins une partie des dispositifs de champ pour former une grappe et à créer (74) un objet logique correspondant dans le dispositif mandataire.

10. Procédé selon l'une quelconque des revendications précédentes, dans lequel il y a plus d'une grappe et où certains dispositifs de champ peuvent appartenir à plus d'une grappe.

11. Dispositif mandataire (20) fournissant une fonction d'interface entre un premier réseau basé sur Ethernet (N1) et un deuxième réseau sans fil à courte distance (N2) pour permettre à un dispositif de commande (12) placé dans le premier réseau de commander des dispositifs de champ (22, 24, 26, 28, 30, 32) situés dans le deuxième réseau et **caractérisé en ce qu'**il est configuré pour :
recevoir, depuis un nombre des dispositifs de champ qui forment indépendamment des grappes (CL1, CL2), de l'information des grappes comprenant les dispositifs de champ inclus dans chaque grappe et les capacités des dispositifs de champ dans ces grappes,
créer un objet logique (LO1, LO2) pour une grappe de dispositifs de champ concernant une ou plusieurs activités de commande liées devant être adressées par les dispositifs de champ de cette grappe,
recevoir tous les signaux liés à la commande dédiés aux activités adressées par les dispositifs de champ de ladite grappe,
déterminer, dans un objet logique correspondant, comment un signal reçu doit être traité et par quel dispositif de champ, et
transmettre le signal reçu ou un ou plusieurs signaux correspondants au dispositif de champ sélectionné dans ladite détermination.

12. Dispositif mandataire selon la revendication 11, qui, lorsqu'il est configuré pour recevoir des signaux liés à la commande, est en outre configuré pour recevoir un signal de commande du dispositif de commande, quand il est configuré pour déterminer comment un signal reçu doit être traité est configuré en outre pour déterminer au moins un dispositif de champ traitant des activités à effectuer relativement au signal de commande, et quand il est configuré pour transmettre le signal reçu ou un signal correspondant, est configuré pour transmettre le signal ou un ou plusieurs signaux correspondants audit dispositif de champ.

13. Dispositif mandataire selon la revendication 11 ou 12, qui, lorsqu'il est configuré pour transmettre le signal reçu ou un signal correspondant, est configuré pour transmettre le signal ou un ou plusieurs signaux correspondants audit dispositif de champ.

14. Dispositif mandataire selon la revendication 11 ou 12, qui, lorsqu'il est configuré pour transmettre le signal reçu ou un signal correspondant, est configuré pour transmettre des signaux à une unité de traitement de données (63), récupérer, au moyen de l'unité de traitement de données, des données dans un magasin de données (65) et répondre au signal reçu avec les données récupérées.

15. Dispositif mandataire selon l'une quelconque des revendications 11 à 14, qui, lorsqu'il est configuré pour recevoir des signaux liés à la commande, est en outre configuré pour recevoir d'un dispositif de champ un signal lié à la mesure, quand il est configuré pour déterminer comment un signal reçu doit être traité, est configuré en outre pour déterminer comment ledit signal doit être rapporté au dispositif de commande, et quand il est configuré pour transmettre le signal reçu ou un signal correspondant, est configuré pour transmettre le signal ou un ou plusieurs signaux correspondants à une unité de traitement de données (63) et lui ordonner de stocker ledit signal ou des signaux correspondants dans un magasin de données (65).

16. Dispositif mandataire selon la revendication 15, dans lequel le signal lié à la mesure est reçu en réponse à un signal de commande précédemment transmis par le dispositif de commande.

17. Dispositif mandataire selon l'une quelconque des revendications 11 à 16, dans lequel au moins une configuration de grappe est dynamique et le dispositif mandataire étant en outre configuré pour recevoir d'une grappe une mise à jour ou pour ordonner à une grappe de se mettre à jour elle-même.

18. Dispositif mandataire selon la revendication 17, configuré en outre pour mettre à jour un objet logique associé à une grappe mise à jour.

19. Dispositif mandataire selon l'une quelconque des revendications 11 à 18, configuré en outre pour ordonner au moins à une partie des dispositifs de champ de former une grappe et lui-même étant configuré pour créer un objet logique correspondant.

20. Dispositif mandataire selon l'une quelconque des revendications 11 à 19, dans lequel il y a plus d'une grappe, où certains des dispositifs de champ peuvent appartenir à plus d'une grappe.

21. Produit de programme informatique (100) pour permettre à un dispositif de commande (12) placé dans un premier réseau basé sur Ethernet (N1) de commander des dispositifs de champ (22, 24, 26, 28, 30, 32) placés dans un deuxième réseau sans fil à courte distance (N2) via un dispositif mandataire (20) fournissant une fonction d'interface entre les premier et deuxième réseaux, comprenant du code de programme informatique pour faire exécuter par le dispositif mandataire, quand ledit code est chargé dans ledit dispositif mandataire, les étapes de la revendication 1.

22. Système de commande informatisé (10) comprenant :
un dispositif de commande (12) placé dans un premier réseau basé sur Ethernet (N1),
un nombre de dispositifs de champ (22, 24, 26, 28, 30, 32) placés dans un deuxième réseau sans fil à courte distance, et
un dispositif mandataire (20) selon la revendication 11.
